Europäisches Patentamt

European Patent Office

Office européen des brevets

(19)

(11) Numéro de publication: **0 262 023 B1**

(12) **FASCICULE DE BREVET EUROPEEN**

(45) Date de publication du fascicule du brevet: 28.02.90

(51) Int. Cl.⁴: **F16C 1/12**, F16D 23/12

(21) Numéro de dépôt: **87402024.1**

(22) Date de dépôt: **10.09.87**

(54) **Dispositif pour la mise en place et la connexion quasi automatique d'une liaison par câble coulissant dans une gaine.**

(30) Priorité: **18.09.86 FR 8613080**

(43) Date de publication de la demande: **30.03.88 Bulletin 88/13**

(45) Mention de la délivrance du brevet: **28.02.90 Bulletin 90/9**

(84) Etats contractants désignés: **DE GB IT**

(56) Documents cités:
**FR-A- 2 531 281**
**US-A- 3 394 212**
**US-A- 4 223 564**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Anger, Gérard, 3, Allée des Bouleaux, F-78480 Verneuil-Sur-Seine(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

La présente invention concerne les liaisons par câble coulissant dans une gaine et, plus particulièrement, celles traversant une cloison. L'invention a plus spécialement pour objet un dispositif pour la mise en place d'une telle liaison entre un organe de commande et un organe commandé situés de part et d'autre d'une cloison séparatrice qui est disposée relativement à ces organes de telle manière que l'on ne peut accéder à l'un des organes à joindre à l'aide de cette liaison qu'au travers de celle-ci.

L'invention concerne un tel dispositif conçu, notamment pour un véhicule automobile où cette liaison à câble est destinée à relier par exemple une pédale d'embrayage à l'embrayage du véhicule.

Dans ce type de liaisons à câble telles que celles qui sont utilisées en automobile pour relier une pédale d'embrayage située dans l'habitacle à l'embrayage du véhicule disposé dans le compartiment moteur, les connexions posent des difficultés de mise en place. En effet, habituellement, l'axe d'articulation de cette pédale, sur lequel on fixe le câble est disposé à proximité d'une cloison sur laquelle prend appui la gaine. Cet axe d'articulation pédale-câble est souvent solidaire de l'extrémité du câble et engagé dans un trou, une encoche ou logement de ce type de la pédale où il est maintenu à l'aide de pièces vissées. La mise en place d'un tel accrochage et son maintien sont souvent difficiles car les conditions d'accès sont peu aisées. Dans le cas particulier de la commande d'embrayage de véhicules où la pédale est dans l'habitacle et très proche de la cloison qui sépare ce dernier du compartiment moteur, l'ancrage du câble se fait à l'extrémité supérieure de la pédale, sous le tableau de bord, dans une zone assez restreinte de volume relativement réduit assez étroit dont l'accès est particulièrement mal commode.

On conçoit que lors du montage en série des véhicules, ces difficultés d'accessibilité posent de sérieux problèmes qui sont peu faciles à résoudre.

Un étant de la technique est par exemple illustré par le document US-A 4 223 564. Le dispositif qui y est divulgué ne permet pas un montage automatique en particulier "en aveugle". En effet, il utilise pour moyens de fixation des écrous placés de part et d'autre de la cloison séparatrice porteuse qu'il faut d'abord mettre en place avant de les visser pour maintenir par serrage le dispositif; il faut aussi appel à un système d'ancrage nécessitant la mise en place d'un axe traversant simultanément un étrier associé à un embout et un levier basculant associé à un organe commandé.

Le but de l'invention est de remédier à ce type d'inconvénients de la technique antérieure. Elle vise plus particulièrement un dispositif équipé d'un système pour assurer l'ancrage de l'une des extrémités du câble sur l'un des organes et aussi de moyens de fixation de la gaine sur la cloison séparatrice, qui est conçu pour être apte à établir la liaison et être mis en place définitivement automatiquement, pratiquement en "aveugle" et n'ayant accès qu'à un seul côté de la cloison.

L'invention a pour objet un dispositif pour la mise en place d'une liaison à câble entre un organe de commande et un organe commandé situés de part et d'autre d'une cloison séparatrice.

Le dispositif selon l'invention est d'un type de celui exposé dans le préambule de la revendication principale et dont les particularités ressortent notamment de la partie caractérisante de celle-ci.

D'autres caractéristiques de l'invention apparaîtront à la lecture de la description qui suit et à l'examen du dessin annexé, donné seulement à titre d'exemple, où:

– la Figure 1 est une vue perspective cavalière représentant l'extérieur d'un mode de réalisation du dispositif selon l'invention, une partie de la cloison et une partie de l'organe de commande afin d'en saisir l'architecture générale, dans les positions qu'ils occupent lors de la présentation du dispositif pour son introduction au travers de la cloison;

– la Figure 2 est une coupe longitudinale axiale de dessus du dispositif selon l'invention fixé à la cloison mais non encore ancré sur l'organe de commande;

– la Figure 3 est une vue analogue à celle de la Figure 2, où le dispositif selon l'invention est maintenant associé à l'organe de commande;

– la Figure 4 est une coupe longitudinale axiale de côté correspondant à la Figure 3;

– la Figure 5 est une section par le plan 5 de la Figure 2; et

– la Figure 6 est une vue de détail partielle illustrant la manière dont opère le système d'ancrage pour établit automatiquement la connexion.

On décrira un mode de réalisation du dispositif selon l'invention dans son application au secteur de l'automobile où on l'utilise pour réunir une pédale d'embrayage de l'habitacle à un embrayage du compartiment moteur. Le secteur de l'automobile étant bien connu, on ne décrira à propos de l'invention que ce qui s'y rapporte directement; c'est pourquoi on ne dessinera qu'une toute petite partie de la pédale d'embrayage et de la cloison séparant le compartiment moteur de l'habitacle, l'embrayage lui n'étant pas illustré.

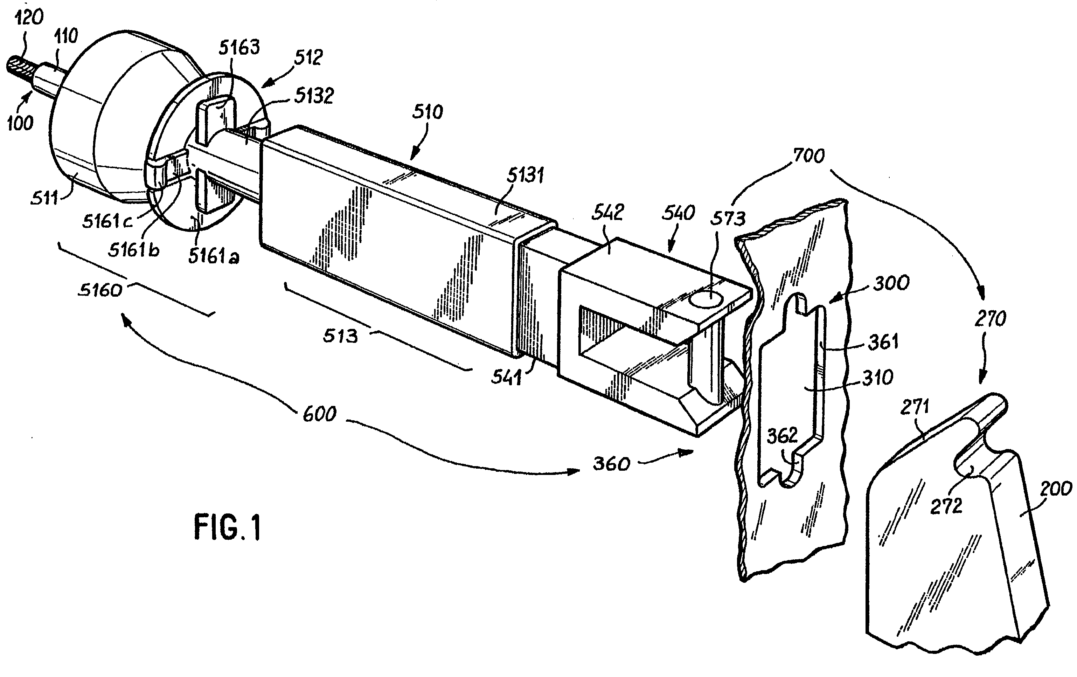

Comme on le voit, en particulier sur la vue perspective schématique de la Figure 1, le dispositif selon l'invention est conçu pour coopérer avec une liaison souple constituée d'un câble 120 coulissant dans une gaine 110, comme il est connu; cette liaison est destinée à relier un organe de commande 200, tel qu'une pédale d'embrayage d'automobile, à un embrayage d'automobile qui constitue par exemple l'organe commandé et qui n'est pas représenté. L'organe de commande et l'organe commandé sont situés de part et d'autre d'une cloison 300 percée d'une ouverture 310 qui permet de faire passer le câble de l'endroit où se trouve l'organe de commande, c'est-à-dire du compartiment-moteur où se trouve l'embrayage, à l'endroit où se trouve l'organe de commande, c'est-à-dire l'habitacle d'un véhicule. Il doit être parfaitement clair qu'un tel passage peut aussi se faire dans le sens opposé, c'est-à-dire de la droite vers la gauche sur les figures du dessin; ceci est absolument indifférent pour l'invention et/ou sa mise en oeuvre, l'ancrage du câble dont il est question pouvant se faire sur l'organe commandé et non pas sur l'organe de commande. Le câble 110 et l'organe de commande 200 sont connectés l'un à l'autre grâce à un système d'ancrage 700 qui présente des éléments coopérant complémentaires sur lesquels on reviendra par la suite et qui sont les uns associés à l'organe de commande et, les autres, au dispositif selon l'invention.

Comme on le conçoit, si la pédale est située dans un endroit peu accessible, proche de la cloison et sous le tableau de bord, il n'est pas commode d'y amarrer le câble qui traverse la cloison. Pour remédier à cet inconvénient, on utilise le dispositif selon l'invention.

Ce dispositif selon l'invention comprend, essentiellement, un corps 510, une entretoise 520, un embout 540 et, éventuellement, une douille intérieure 530.

Comme on le voit sur le dessin, le corps 510 comprend un pavillon tronconique en entonnoir 511 sur lequel on reviendra par la suite. Il comprend, aussi, une embase 512 équipée d'une partie de moyens de fixation 600 et un guide 513.

Les moyens de fixation 600 sont constitués par une partie 5160 d'une collerette 5161 a séparée en deux demi-disques par des languettes radiales 5161 b élastiques qui portent, au voisinage de leur extrémité libre respective, des protubérances 5161 c placées sur la face opposée à celle où se trouve le pavillon 511. Cette partie des moyens de fixation comprend aussi une gorge 5162 dont la profondeur est pratiquement égale, ou un peu supérieure, à l'épaisseur de la cloison 300. Cette partie des moyens 600 comprend encore un socle 5163 qui présente deux ailettes 5163 a opposées. Ces ailettes possèdent un profil à contour non-circulaire d'une dimension tout juste un peu inférieure à celle du contour périphérique d'une fenêtre 361 ménagée dans l'ouverture 310. Les bords opposés de la fenêtre suivant son grand axe présentent, de part et d'autre, des encoches 362 destinées à coopérer avec les protubérances 5161 c des languettes radiales élastiques 5161 b. On voit donc que cette fenêtre et ces encoches constituent une autre partie 360 des moyens de fixation 600 destinée à coopérer avec la partie 5160 de ces derniers solidaire de l'embase 512 du corps.

Le guide comprend un tronçon d'extrémité 5131 dont la section droite présente un profil non circulaire relié à l'embase par un tronçon intermédiaire 5132 à section droite de profil circulaire par exemple.

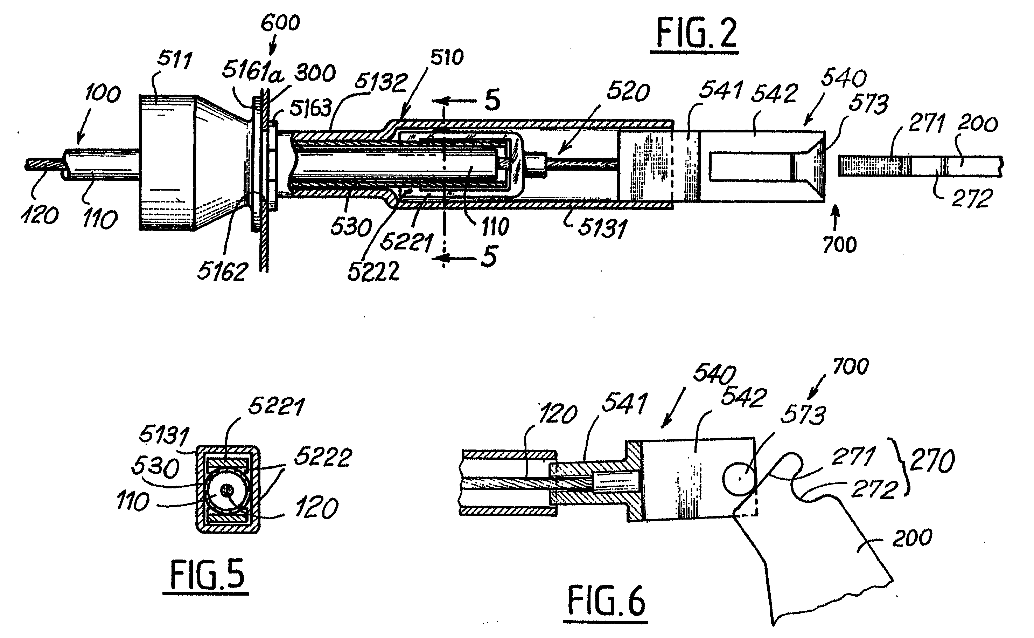

Comme on le voit aux Fig. 1 et 2, l'embout 540 est momentanément du moins partiellement engagé dans la cavité du guide pendant les phases initiales de la mise en oeuvre du dispositif selon l'invention. Pour ce faire, il présente un prolongement 541 dont la section droite présente un profil extérieur adapté à celui du tronçon d'extrémité 5131 du guide. Ce profil est choisi de mainère à interdire toute rotation relative de l'embout 540 et du corps 510 suivant l'axe longitudinal lorsqu'ils sont engagés l'un dans l'autre et à permettre leur translation relative suivant cet axe. Par exemple, on adopte un profil rectangulaire comme le montre la section de la Figure 5. Ce prolongement porte une chape 542 en U traversée par une cheville 573 constituant un des éléments du système d'ancrage 700. Le câble 120 est fixé sur le prolongement 541 par toute technique appropriée courante, par exemple soudage, matage, collage, emprisonnement, surmoulage ou autres.

Dans le guide 513, se trouve logée une entretoise 520 constituée d'un fourreau 521, que traverse le câble qui y est fixé de façon usuelle, et qui se prolonge par une pince 522; cette pince présente deux branches 5221 qui se terminent par des mors 5222 chevauchant au moins momentanément, la douille 530 interposée entre le corps 510 et la gaine 110 du câble comme cela apparaît sur les Figures 2 et 5 par exemple. L'entretoise 520 est configurée de manière à pouvoir se déplacer en translation dans la cavité du tronçon d'extrémité 5131 selon son axe sans pouvoir y tourner. Ce déplacment s'effectue avec résistance due au frottement des mors 5222 sur la douille 530.

La pédale d'embrayage 200, articulée sur un axe 210, présente un crochet 270 fait d'un cran 272 précédé d'une rampe 271. Le cran et la rampe constituent des éléments du sytème d'ancrage 700 complémentaires des éléments 542, 573 associés au câble.

A l'origine, tous ces composants du dispositif selon l'invention se trouvent dans les positions relatives illustrées sur la Figure 1 et la coupe longitudinale de dessus de la Figure 2 permet de saisir comment intérieurement ils sont disposés.

On prépare à l'origine le dispositif selon l'invention en introduisant le câble 120 et la gaine 110 dans le corps après avoir fixé sur le câble l'entretoise 520 et l'embout 540 dans les positions relatives dessinées sur la Figure 2; les formes complémentaires des profils des sections droites intérieure et extérieure du tronçon d'extrémité 5131, de l'embout 540 et de l'entretoise 520 font que lorsque les constituants sont engagés uns dans les autres, ils ne peuvent que subir une translation suivant l'axe longitudinal. L'entretoise 520 qui repose alors au fond du tronçon d'extrémité 5131, enserre la douille 530 dans ses branches 5221, immobilisant par frottement le câble par rapport au corps 510.

Le dispositif 500 étant ainsi préparé, on le présente par la face de la cloison opposée à celle où se trouve l'organe de commande, c'est-à-dire la face située à gauche sur le dessin (comme schématisé sur la Figure 1), et on engage son embout 540 dans la fenêtre 361 à contour non circulaire; ceci fixe les orientations relatives en rotation. On enfonce ensuite le tout en direction de la cloison 300. Lorsque les protubérances 5161 c des languettes 5161 b recontrent la face de la cloison opposée à la pédale 200, on pousse le dispositif selon l'invention pour appliquer les demi-disques de la collerette 5161 a contre cette face; ceci fait fléchir élastiquement les languettes 5161 b. La gorge 5162 se trouve alors dans l'épaisseur de la cloison et on fait ensuite tourner tout le dispositif d'un quart de tour suivant son axe longitudinal. En effectuant cette opération, les ailettes 5163 a du socle 5163 viennent en prise avec la face de la cloison dirigée vers la pédale, en reposant sur les bords de la fenêtre dirigés selon son petit axe; simultanément, les protubérances 5161 des languettes 5161 b radiales élastiques s'enclenchent dans les encoches 362.

Le dispositif se trouve alors ainsi encliqueté et verrouillé sur la cloison qu'il emprisonne partiellement entre les parois qui se font face de sa collerette et de son socle et qui sont maintenant situées de part et d'autre de celle-ci.

On pousse alors sur le câble qui dépasse, à gauche de la cloison sur le dessin; ceci le fait glisser dans sa gaine en direction de la pédale. Pendant cette translation, l'embout 540 sort du guide 513 du corps 510 tout en étant immobilisé contre toute rotation et sa cheville 573 vient au contact de la rampe de la pédale. Cette opération est facilitée par la configuration évasée de la chape 542 en U; ceci permet de centrer cette chape sur la pédale qu'elle tend à chevaucher. Si les positions relatives sont telles que l'embout 540 sort et se dégage du tronçon d'extrémité 5131 du guide 513 avant que la chape 542 et/ou la cheville 573 atteigne et rencontre le crochet 270 de la pédale, formé du cran 272 et de la rampe 271, l'orientation correcte de l'embout, par rapport à la pédale, qui permet l'amarrage à coup sûr est toutefois conservée par l'entretoise 520 dont le profil complémentaire de celui du tronçon d'extrémité n'autorise qu'une translation. L'effort développé sur le câble fait que celui-ci a tendance à fléchir par suite de sa raideur et de son élasticité inhérentes, en montant contre la rampe; cette force de rappel dûe à la flexion élastique, ajoutée à la gravité, engage automatiquement la cheville 573 dans le cran 272, l'embout n'ayant pas pu tourner selon l'axe pour les raisons indiquées, l'aptitude à la torsion spontanée du câble étant très faible.

On comprend donc que cette mise en place et cette fixation de la liaison ont pu se faire pratiquement automatiquement, en agissant d'un seul côté de la cloison et "en aveugle", sans qu'il soit nécessaire de suivre visuellement les opérations pour, éventuellement, les diriger et intervenir.

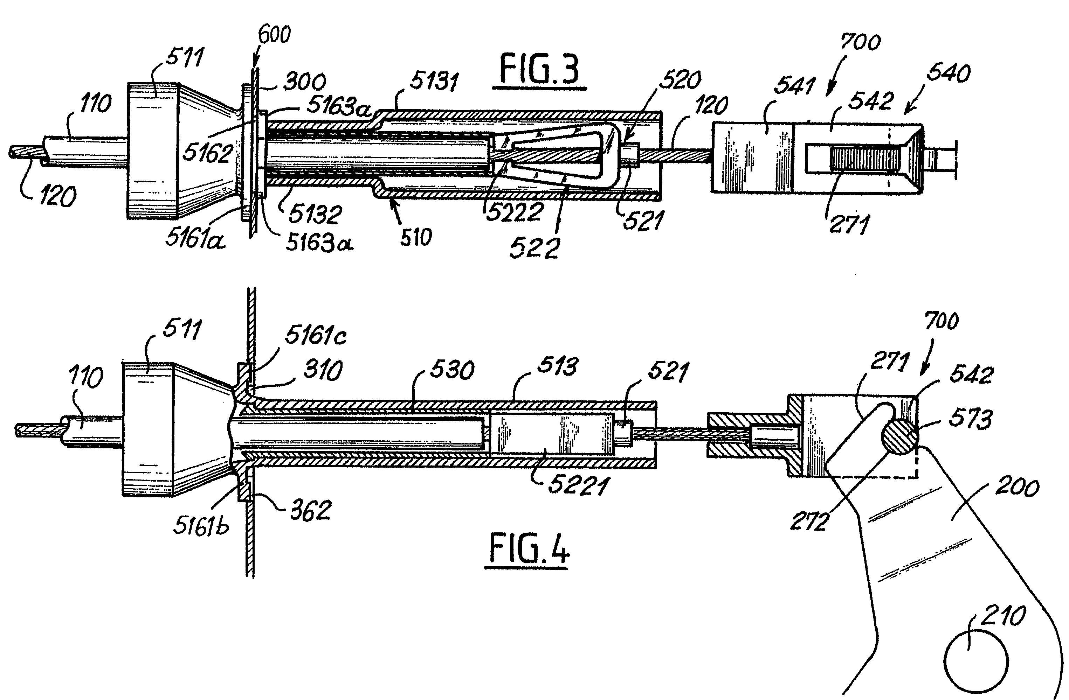

Pendant cette translation de l'embout poussé par le câble hors du guide, l'entretoise 520 a glissé dans le tronçon d'extrémité 5131 d'une quantité égale, car elle aussi est fixée au câble comme l'embout. Les branches 5221 de la pince 522 ont échappé à la douille 530 dont le bout sert maintenant de butée axiale pour les mors 5222 qui se sont rapprochés du câble 120 comme illustré clairement notamment sur la Figure 3.

Comme on l'a indiqué précédemment, le pavillon 511 tronconique en forme d'entonnoir n'est pas indispensable au dispositif selon l'invention. Il a simplement pour but de servir au logement d'un mécanisme de rattrapage automatique de l'usure; un tel mécanisme, de tout type classique approprié, permet de régler automatiquement la position de la gaine 110 par rapport au guide 513, au fur et à mesure de l'usure de l'embrayage.

La douille 530 fait partie de ce mécanisme. Dans une variante ne comportant pas ce dernier, la douille 530 est agencée, notamment avec des épaulement à ses extrémités, pour servir de butée axiale à la gaine 110.

On a décrit un mode de réalisation de l'invention à propos de l'une de ses applications au secteur de l'automobile. Il doit être clair que l'invention n'est pas limitée à ce domaine technique et qu'elle peut être utilisée chaque fois qu'une connexion "en aveugle" à l'aide d'un câble coulissant dans une gaine entre organes de commande et commandé est à faire au travers d'une cloison parce que seulement une seule face de cette dernière est accessible.

## Revendications

1. Dispositif pour la mise en place d'une liaison à câble coulissant dans une gaine entre un organe de commande (200) et un organe commandé situés de part et d'autre d'une cloison (300) séparatrice, où ce dispositif comprend d'une part un corps (510) muni d'une partie (5160) de moyens de fixation (600) qui coopère avec une partie complémentaire (360) de ceux-ci (600) associée à la cloison (300) qu'il traverse par une ouverture (310) pour l'assujettir à cette dernière à proximité de l'une de ses extrémités qui reçoit la gaine (110) et, d'autre part, un embout (540) momentanément au moins partiellement engagé dans l'autre des extrémités du corps (510) par rapport auquel il est mobile et dont une (541) des extrémités est fixée au câble (120) et dont l'autre (542) des extrémités porte des éléments (573) d'un système d'ancrage (700) qui coopèrent avec des éléments complémentaires (270) de celui-ci (700) portés par l'organe de commande (200), caractérisé en ce que le corps (510) comprend d'une part une embase (512) portant une partie (5160) des moyens de fixation (600) qui comprennent des moyens de positionnement angulaire (5161b, 362) entre le corps et la cloison, et d'autre part un guide (513) qui présente un tronçon d'extrémité (5131) à section droite intérieure à profil non circulaire où peut s'engager un prolongement (541) à section droite extérieure à profil complémentaire de l'embout (540), en ce que le système d'ancrage (700) comprend comme éléments complémentaires coopérants, une cheville (573) solidaire d'une chape (542) de l'extrémité libre de l'embout (540), et un crochet (270) solidaire de l'organe de commande (200) et constitué d'un cran (272) précédé d'une rampe (271) dirigée vers la chape (542) et en ce que le dispositif comporte des moyens de maintien (520, 530) propres à retenir sans rotation relative l'embout (540) dans le corps (510) pendant l'insertion et la fixation de ce dernier sur la cloison (300).

2. Dispositif selon la revendication 1, caractérisé en ce que les moyens de maintien comprennent une entretoise (520) qui comprend un fourreau (521) fixé au câble et, solidaire de ce fourreau, une pince (522) constituée de deux branches (5221) portant chacune au voisinage de leur extrémité libre un mors (5222), les deux mors enserrant une douille (530) avant et pendant la mise en place du dispositif et butant contre l'extrémité de cette douille après mise en place.

3. Dispositif selon la revendication 1 ou 2, caractérisé en ce que les moyens de fixation (600) pour assujettir le corps (510) à la cloison (300) qu'il traverse par l'ouverture (310) opèrent par encliquetage après insertion et rotation.

4. Dispositif selon la revendication 3, caractérisé en ce que les moyens de fixation (600) comprennent, d'une part, une partie (360) ménagés dans l'ouverture (310) comprenant une fenêtre (361) à contour non circulaire dont les bords situés sur son grand axe sont entaillés d'encoches (362) et, d'autre part, une partie (5160) disposée sur l'embase (512) et qui comprend à partir de l'extrémité du corps qui reçoit la gaine, une collerette (5161a) pour prendre appui sur l'une des faces de la cloison et séparée en deux demi-disques par deux languettes (5161b) radiales relativement élastiques diamétralement opposées qui portent chacune une protubérance (5161c) destinée à s'engager relativement sans jeu dans une des encoches (362), une gorge (5162) dont la profondeur est pratiquement égale à l'épaisseur de la cloison (300), et un socle (5163) à contour complémentaire de celui de la fenêtre (361) présentant deux ailettes (5163a) opposées pour prendre appui sur l'autre des face de la cloison (300) au voisinage des grands bords de la fenêtre (361) situés sur son petit axe.

5. Dispositif selon l'une quelconque des revendications 1 à 4, caractérisé en ce que le corps (510) est muni, à son extrémité opposée à celle qui reçoit l'embout (540), d'un pavillon (511) pour recevoir un mécanisme de rattrapage d'usure connu en soi, et en ce que la gaine (110) prend appui sur le corps (510) par l'intermédiaire de ce mécanisme.

**Patentansprüche**

1. Vorrichtung zum Instellungbringen einer Verbindung zwischen einem Steuerelement (200) und einem gesteuerten Element, die beiderseits einer Trennwand (300) sitzen, mit einem in einem Mantel gleitenden Kabel, wobei die Vorrichtung einerseits einen Körper (510), welcher mit einem Teil (5160) von Befestigungsmitteln (600) versehen ist, das mit einem komplementären Teil (360) derselben (600) zusammenwirkt, das der Trennwand (300) zugeordnet ist, welche er durch eine Öffnung (310) durchdringt, um sich an letztere in der Nähe des einen seiner Enden, welches den Mantel (110) aufnimmt, zu legen, und andererseits ein Ansatzstück (540), das vorübergehend wenigstens teilweise im anderen der Enden des Körpers (510) eingefügt ist, in Bezug auf welchen es beweglich ist, und dessen eines (541) Ende am Kabel (120) befestigt ist und dessen anderes (542) Ende Elemente (573) eines Verankerungssystems (700) trägt, die mit auf dem Steuerelement (200) sitzenden komplementären Elementen (270) desselben (700), zusammenwirken, umfaßt, dadurch gekennzeichnet, daß der Körper (510) einerseits eine Fußplatte (512), welche ein Teil (5160) der Befestigungsmittel (600) tragen, welche Mittel zur Winkelpositionierung (5161b, 362) zwischen dem Körper und der Trennwand umfassen, und andererseits eine Führung (513) umfaßt, welche einen Endabschnitt (5131) mit einem Innenquerschnitt mit nicht kreisförmigem Profil aufweist, wo sich eine Verlängerung (541) des Ansatzstückes (540) mit einem Außenquerschnitt komplementären Profils einlegen kann, daß das Verankerungssystem (700) als zusammenwirkende komplementäre Elemente einen mit einem Bügel (542) des freien Endes des Ansatzstückes (540) fest verbundenen Zapfen (573) und einen mit dem Steuerelement (200) fest verbundenen und durch eine Rastkerbe (272), welcher eine zum Bügel (542) weisende Rampe (271) vorausgeht, gebildeten Haken (270) umfaßt, und daß die Vorrichtung Haltemittel (520, 530) aufweist, die für ein relativ drehungsfreies Halten des Ansatzstückes (540) im Körper (510) beim Einsetzen und Festmachen des letzteren an der Trennwand (300) geeignet sind.

2. Vorrichtung nach Anspruch 1, dadurch gekennzeichnet, daß die Haltemittel ein Abstandstück (520) umfassen, welches eine am Kabel befestigte Scheide (521) und, fest verbunden mit dieser Scheide, eine Klemme (522), welche durch zwei Schenkel (5221) gebildet ist, die jeweils im Bereich ihres freien Endes eine Spannbacke (5222) tragen, umfaßt, wobei die beiden Spannbacken eine Büchse (530) vor und während des Instellungbringens der Vorrichtung einschließen und nach dem Instellungbringen gegen das Ende dieser Büchse anliegen.

3. Vorrichtung nach Anspruch 1 oder 2, dadurch gekennzeichnet, daß die Befestigungsmittel (600) zum Anlegen des Körpers (510) an die Trennwand (300), welchen er durch die Öffnung (310) durchdringt, durch Verklinkung nach Einsetzen und Drehen arbeiten.

4. Vorrichtung nach Anspruch 3, dadurch gekennzeichnet, daß die Befestigungsmittel (600) einerseits ein in der Öffnung (310) ausgespartes Teil (360), welches ein Fenster (361) mit nicht-kreisförmigem Umriß umfaßt, dessen auf seiner großen Achse liegenden Ränder durch Vertiefungen (362) eingekerbt sind, und andererseits ein Teil (5160) aufweisen, welches auf der Fußplatte (512) angeordnet ist und welches ausgehend vom Ende des Körpers, das den Mantel aufnimmt, einen Kragen (5161a) zur Anlage an der einen der Seiten der Trennwand und unterteilt in zwei Halbscheiben durch zwei verhältnismäßig elastische diametral gegenüberliegende radiale Zungen (5161b), die jeweils einen Vorsprung (5161c) für ein relativ spielfreies Einlegen in eine der Ausnehmungen (362) tragen, eine Kehle (5162), deren Tiefe praktisch gleich der Dicke der Trennwand (300) ist, und einen Sockel (5163) mit zu demjenigen des Fensters (361) komplementären Umriß, welcher zwei entgegengesetzte Flügel (5163a) für ein Anliegen gegen die andere Seite der Trennwand (300) im Bereich der großen Ränder des Fensters (361), die auf seiner kleinen Achse liegen, umfaßt.

5. Vorrichtung nach irgendeinem der Ansprüche 1 bis 4, dadurch gekennzeichnet, daß der Körper (510) an seinem zu demjenigen das Ansatzstück (540) aufnehmenden entgegengesetzten Ende mit einem Trichter (511) zur Aufnahme eines an sich bekannten Verschleiß-Nachstellmechanismusses versehen ist, und daß der Mantel (110) gegen den Körper (510) über diesen Mechanismus anliegt.

**Claims**

1. Device for fitting a cable connection sliding in a sheath between a control member (200) and a controlled member located on either side of a separating partition (300), where said device comprises on the one hand a body (510) provided with one part (5160) of the fixing means (600) cooperating with a complimentary part (360) thereof (600) associated with the partition (300), which it traverses by an opening (310) for fastening to the latter in the vicinity of one of its ends which receives the sheath (110) and on the other hand an end fitting (540) momentarily at least partly engaged in the other of the ends of the body (510) with respect to which it is mobile and whereof one (541) of the ends is fixed to the cable (120) and whereof the other (542) of the ends carries elements (573) of an anchoring system (700), which cooperate with complimentary elements (270) thereof (700) carried by the control member (200), characterized in that the body (510) comprises on the one hand a base (512) carrying part (5160) of the fixing means (600), which comprise angular positioning means (5161b, 362) between the body and the partition and on the other hand a guide (513) having an end section (5131) with an internal cross-section with a non-circular profile, where engagement can take place of an extension (541) with an external cross-section having a complimentary profile of the end fitting (540), in that the anchoring system (700) comprises as cooperating complimentary elements, a peg (573) integral with a yoke (542) of the free end of end fitting (540) and a hook (270) integral with the control member (200) and constituted by a catch (272) preceded by a ramp (271) directed towards the yoke and in that the device has holding means (520, 530) for holding the end fitting (540) without any relative rotation in body (510) during the insertion and fixing of the latter to partition (300).

2. Device according to claim 1, characterized in that the holding means comprise a spacer (520), which has a sleeve (521) fixed to the cable and integral with said sleeve a clamp (522) constituted by two branches (5221), each carrying in the vicinity of their free end a jaw (5222), the two jaws confining a socket (530) before and during the fitting of the device and abut against the end of said socket following fitting.

3. Device according to claims 1 or 2, characterized in that the fixing means (600) for fixing the body (510) to the partition (300) which it traverses through opening (310) operate by a catching action after insertion and rotation.

4. Device according to claim 3, characterized in that the fixing means (600) comprise on the one hand a part (360) located in opening (310) having a window (361) with a non-circular contour, whose edges located on its major axis are provided with slots (362) and on the other hand a part (5160) located on base (512) and comprising, as from the end of the body receiving the sheath, a collar (5161a) for bearing on one of the faces of the partition and subdivided into two half-disks by two relatively elastic, diametrically opposite, radial tongues (5161b), each of which carries a protuberance (5161c) for engaging relatively without clearance in one of the slots (362), and a groove (5162), whose depth is substantially equal to the thickness of partition (300), and a base (5163) with a contour complimentary to that of the window (361) having two opposite fins (5163a) for bearing on the other of the faces of the partition (300) in the vicinity of the large edges of the window (361) located on its minor axis.

5. Device according to one of the claims 1 to 4, characterized in that at its end opposite to that receiving the end fitting (540), the body (510) is provided with a member (511) for receiving a per se known wear compensating mechanism and in that the sheath (110) bears on the body (510) via said mechanism.

FIG.1

EP 0 262 023 B1

FIG. 2

FIG. 5

FIG. 6

FIG.3

FIG.4